# EUROPÄISCHE PATENTSCHRIFT

(11) **EP 0 391 018 B1**
(45) Veröffentlichungstag und Bekanntmachung des Hinweises auf die Patenterteilung: **06.04.1994**
(21) Anmeldenummer: 90100477.0
(22) Anmeldetag: 11.01.1990
(51) Int. Cl.: G01K 5/48

(54) **Sensor für Mess- und Analysengeräte**
Sensor for measuring- and analysing apparatus
Détecteur pour appareils de mesure et d'analyse

(30) Priorität: 01.02.1989 EP 89101676
(43) Veröffentlichungstag der Anmeldung: 10.10.1990
(73) Patentinhaber: LEYBOLD AKTIENGESELLSCHAFT, D-63450 Hanau (DE)
(72) Erfinder: Voss, Günter, Dr., D-5023 Much (DE)
(74) Vertreter: Leineweber, Jürgen, Dipl.-Phys.

(56) Entgegenhaltungen:
- FR-A- 2 285 601
- GB-A- 1 085 862
- US-A- 3 483 748
- PATENT ABSTRACTS OF JAPAN, Band 6, Nr. 41 (P-106)[919], 13. März 1982; & JP-A-56 158 929
- PATENT ABSTRACTS OF JAPAN, Band 8, Nr. 259 (P-317)[1696], 28. November 1984, Seite 102 P 317; & JP-A-59 131 130
- PATENT ABSTRACTS OF JAPAN, Band 11, Nr. 112 (P-565)[2559], 9. April 1987, Seite 57 P 565; & JP-A-61 260 134
- PATENT ABSTRACTS OF JAPAN, Band 11, Nr. 15 (P-536)[2462], 16. Januar 1987, Seite 31 P 536; & JP-A-61 189 426
- INSTRUMENTS AND EXPERIMENTAL TECHNIQUES, Band 14, Nr. 1, Teil 2, 1971, Seiten 289-299, Consultants Bureau, a division of Plenum Publishing Corp., New York, US; V.V. PERMYAKOV et al.: "Instrument for monitoring the operation of a metallic helium cryostat"

## Beschreibung

Die Erfindung bezieht sich auf einen Sensor für Meß- oder Analysengeräte mit einem aus einem gestalterinnernden Werkstoff bestehenden Sensorelement, bei welchem die zu messende Größe unmittelbar oder mittelbar Einfluß auf den Zustand des Werkstoffes des Sensorelementes ausübt.

Ein Beispiel für ein Meßgerät, bei dem die zu messende Größe unmittelbar Einfluß auf den Zustand des Werkstoffes des Sensorelementes ausübt, ist das Widerstandsthermometer. Dieses Thermometer nutzt die Temperaturabhängigkeit des elektrischen Widerstandes des von einem Strom durchflossenen Sensorelementes aus. Bei diesem Meßgerät hat deshalb die Meßgröße (Umgebungstemperatur des Sensorelementes) unmittelbaren Einfluß auf den (thermischen) Zustand des Werkstoffes des Sensorelementes. Die unmittelbar von der Temperatur abhängige Größe des durch das Sensorelement fließenden Stromes kann als Maß für die zu messende Temperatur verwendet werden.

Ein Beispiel für ein Meßgerät, bei welchem die zu messende Größe mittelbar Einfluß auf den Zustand des Werkstoffes des Sensorelementes ausübt, ist das Wärmeleitungsvakuummeter (Pirani). Bei diesem Gerät wird der Zusammenhang zwischen dem Druck eines Gases und seiner Wärmeleitfähigkeit zur Druckmessung ausgenutzt. Ein stromdurchflossenes Sensorelement gibt um so mehr Wärme ab je höher der Druck ist. Bei einem Meßgerät dieser Art hat deshalb die Meßgröße (Druck bzw. Vakuum) einen mittelbaren Einfluß auf den (thermischen) Zustand des Sensorelementes. Vom thermischen Zustand des Sensorelementes hängt die Größe des fließenden Stromes ab, so daß diese Größe als Maß für den Druck verwendet werden kann.

Sensoren dieser vorbekannten Art sind technisch relativ aufwendig. Wärmeleitungsvakuummeter haben insbesondere bei hohen und bei sehr niedrigen Drücken eine begrenzte Empfindlichkeit und damit einen begrenzten Meßbereich.

Zur Beobachtung der Temperatur ist es bekannt, Sensorelemente einzusetzen, die aus einem gestalterinnernden Werkstoff bestehen. Werkstoffe dieser Art sind allgemein aus dem Buch "Legierungen mit Formgedächtnis", Dieter Stöckel, Expert Verlag, 1988 bekannt. Es handelt sich um Legierungen, deren Atome bei unterschiedlichen Temperaturen unterschiedliche kristalline Strukturen haben, und zwar bei höheren Temperaturen eine Austenit-Struktur (Hochtemperaturphase) und bei niedrigeren Temperaturen eine Martensit-Struktur (Niedertemperaturphase). Werkstoffe dieser Art erinnern sich an eine in der Hochtemperaturphase eingeprägte Form. Werden sie in der Niedertemperaturphase verformt und durch Erwärmen in die Hochtemperaturphase gebracht, dann nehmen sie die ursprünglich in der Hochtemperaturphase eingeprägte Form wieder an. Die Formänderung beginnt bei der sogenannten Aₛ-Temperatur, das ist diejenige Temperatur, bei der der Strukturübergang von der Niedertemperaturphase in die Hochtemperaturphase beginnt. Die gesamte Formänderung findet in einem relativ kleinen Temperaturbereich statt, z. B. 10 bis 20 K. Die Aₛ-Temperatur kann je nach Legierung zwischen -150° und +150° C liegen.

Gestalterinnernde Werkstoffe haben also die Eigenschaft, daß sich eine bei niedrigen Temperaturen - unterhalb der Aₛ-Temperatur - ausgeführte Verformung (Biegung, Torsion, Dehnung, Stauchung) beim Übergang von der Niedertemperaturphase in die Hochtemperaturphase zurückbildet. Beispielsweise verkürzt sich ein aus dem Werkstoff Nitinol bestehender, bei niedrigen Temperaturen gedehnter Draht beim Übergang von der Niedertemperaturphase in die Hochtemperaturphase um ca. 3 bis 5%. Diese Längerveränderung ist der "normalen" thermischen Längenänderung entgegengerichtet und um ein Vielfaches größer.

Wegen des relativ kleinen Temperaturbereiches, in dem die Formänderung der Werkstoffe mit gestalterinnernder Eigenschaft stattfindet, sind diese nur sehr begrenzt als Temperaturmeßgeräte einsetzbar. Sie werden deshalb als Temperatur-Detektoren verwendet und haben im wesentlichen eine Temperatur-Überwachungsfunktion. Ihre Aufgabe ist es, ein Signal zu erzeugen, wenn eine bestimmte Temperatur über- bzw. unterschritten wird (vgl. Patent Abstracts of Japan, Bd. 6, Nr. 41, JP-A-56158929 und Bd. 8, Nr. 259, JP-A-59- 131 130, US-A-34 83 748, FR-A-22 85 601).

Der vorliegenden Erfindung liegt die Aufgabe zugrunde, einen Sensor der eingangs genannten Art zu schaffen, dessen Aufbau einfach ist und der einen großen Meßbereich hat.

Erfindungsgemäß wird diese Aufgabe durch die kennzeichnenden Merkmale der Patentansprüche gelöst.

Nach der Erfindung ist das in an sich bekannter Weise aus einem gestalterinnernden Werkstoff bestehende Sensorelement derart beheizbar, daß seine Betriebstemperatur auf eine Temperatur im Bereich des strukturellen Phasenüberganges seines Werkstoffes einstellbar ist. Dadurch übt die zu messende Größe - sei es unmittelbar die Temperatur oder mittelbar eine andere Größe, wie Dichte, Druck, Wärmeleitung, Gasart usw. - einen Einfluß auf den kristallinen Zustand des Werkstoffes des Sensorelementes aus. Die Energie, die zu- oder abgeführt werden muß, um eine wirksame Änderung dieses Zustandes zu erreichen, ist gering, so daß das erfindungsgemäße Sensorelement überaus empfindlich ist. Es ist deshalb insbesondere für Meßgrößen geeignet, die mittelbar Einfluß auf den kristallinen Zustand des Werkstoffes des Sensorelementes haben. Die Schaffung von Meßgeräten mit großen Meßbereichen für derartige Meßgrößen ist damit möglich geworden.

Da ein Meßgerät mit einem Sensor der erfindungsgemäßen Art sehr empfindlich ist, weil die zur Änderung des kristallinen Zustandes erforderlichen Energiebeträge gering sind, ist es zweckmäßig, die während des Betriebs konstant zu haltende Temperatur des Sensorelementes derart zu wählen, daß sie In einem Bereich liegt, in dem die von der Temperatur abhängige Strukturveränderung des Werkstoffes des Sensorelementes besonders hoch ist.

Ein besonders vorteilhaftes Betriebsverfahren für einen Sensor der erfindungsgemäßen Art besteht deshalb darin, daß seine Temperatur (und damit seine Form bzw. sein kristalliner Zustand) mit Hilfe eines regelbaren Heizstromes konstant gehalten wird und daß die am Drahtabschnitt anliegende Spannung, der Heizstrom oder die Heizleistung als Meßgröße verwendet werden. Ein Sensor dieser Art ist einfach, kompakt, genau, empfindlich und reaktionsschnell.

Weitere Vorteile und Einzelheiten der Erfindung sollen anhand der Figuren 1 bis 6 erläutert werden. Es zeigen:
- Figuren 1 und 2 Ausführungsformen mit Sensoren aus gestalterinnerndem Werkstoff,
- Figur 3 einen Sensor, bei dem Biegekräfte ausgenutzt werden,
- Figur 4 einen Sensor, dessen Bewegung auf ein Zeigerinstrument übertragen wird,
- Figur 5 einen Sensor nach der Erfindung mit regelbarer Heizung und
- Figur 6 ein Diagramm zur Darstellung von Eigenschaften eines gestalterinnernden Werkstoffes.

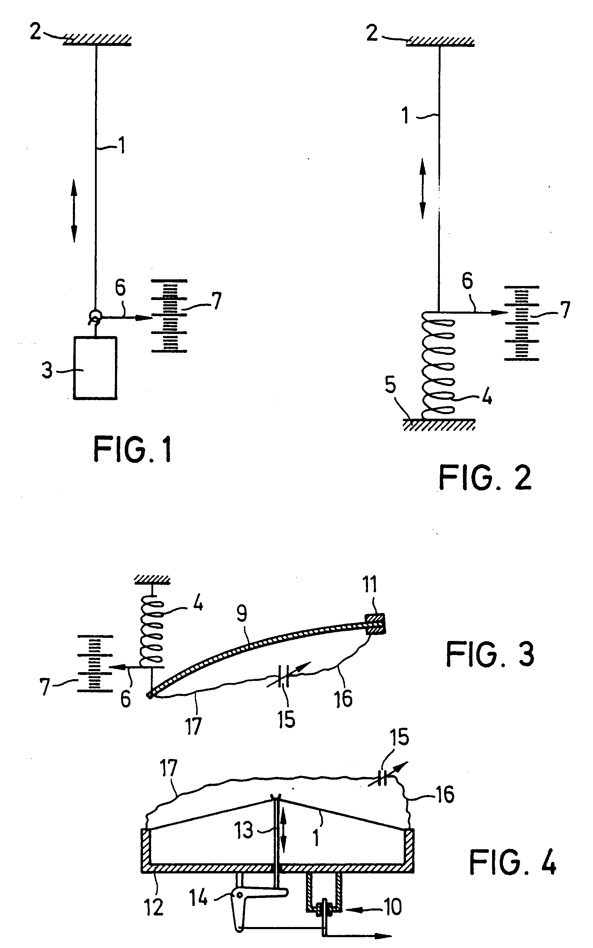

Die Figuren 1 und 2 zeigen jeweils einen Sensor, welcher den Drahtabschnitt 1 aus gestalterinnerndem Werkstoff, zweckmäßig Nitinol, umfaßt. Der Drahtabschnitt kann z. B. eine Länge von 10 cm und einen Durchmesser von 1 mm haben. Mit seinem oberen Ende ist der Drahtabschnitt 1 jeweils bei 2 an einem festen Punkt aufgehängt. Das untere Ende des Drahtabschnittes 1 ist jeweils zugbelastet, beim Ausführungsbeispiel nach Figur 1 mit einem Gewicht 3, beim Ausführungsbeispiel nach Figur 2 mit einer Feder 4, deren freies Ende bei 5 befestigt ist. Für die Verwendung eines Gewichtes 3 als Zuglast spricht, daß die Last unabhängig von der Ausdehnung des Drahtabschnittes ist. Der Nachteil dieser Ausführungsform des Sensors ist seine Lageabhängigkeit. Demgegenüber ist der Sensor nach Figur 2 lageunabhängig. Nachteilig ist, daß sich die von der Feder 4 erzeugte Zugbelastung mit der Änderung der Länge des Drahtabschnittes 1 ändert.

Der erfindungsgemäße Sensor kann die gewünschte Funktion (Längen-oder Formänderung bei Temperatur-Änderung) erfüllen, wenn seine Betriebstemperatur in dem Temperaturbereich liegt, in dem die Form- bzw. Längenänderung aufgrund seiner gestalterinnernden Eigenschaft stattfindet. Liegt dieser Temperaturbereich z. B. bei 20° bis 30° C, dann bewirkt eine Temperaturänderung innerhalb dieses Bereiches eine relativ große Längen- oder Formänderung des Drahtabschnittes 1, welche z. B. mit Hilfe eines am freien Ende des Drahtabschnittes 1 befestigten Zeigers 6 und einer Meßskala 7 festgestellt werden kann. Die Meßbereiche von Sensoren nach den Figuren 1 und 2 sind deshalb sehr klein.

Beim Sensor nach Figur 4 ist wieder ein Drahtabschnitt 1 vorgesehen, dessen Enden an einem Träger 12 befestigt sind. Etwa in der Mitte des Drahtabschnittes 1 wirkt ein seitlich dazu verschiebbarer Stift 13 ein. Dieser stützt sich auf einem Winkelhebel 14 ab, wie er bei Kapsel-Vakuummetern zur Betätigung eines Zeigersystems 10 bekannt ist. Eine infolge einer Temperaturveränderung eintretende Änderung der Länge des Drahtabschnittes 1 bewirkt eine entsprechende Zeigerbewegung.

Wesentlich ist, daß der Drahtabschnitt 1 oder das Bauteil 9 eine Betriebstemperatur hat, die in dem Temperaturbereich liegt, bei dem die Form- bzw. Längenänderung stattfindet. Eine zweckmäßige Temperatur aus diesem Bereich kann dadurch eingestellt werden, daß der Drahtabschnitt 1 oder das Bauteil 9 mit Hilfe eines elektrischen Stromes beheizt werden. Bei den Sensoren nach den Figuren 3 und 4 ist beispielsweise jeweils eine regelbare Stromquelle 15 dargestellt, die über die Leitungen 16 und 17 mit den Enden des Drahtabschnittes 1 bzw. des Bauteils 9 verbunden ist. Die Stromstärke ist derart einzustellen, daß der Drahtabschnitt 1 oder das Bauteil 9 jeweils die gewünschte Temperatur annehmen. Infolge dieser Maßnahmen kann der Meßbereich des Sensorelementes drastisch vergrößert werden. Voraussetzung ist, daß nicht mehr die Längen- oder Formänderung, sondern beispielsweise der durch das Sensorelement 1, 9 fließende Strom als Basis für das Meßergebnis verwendet wird.

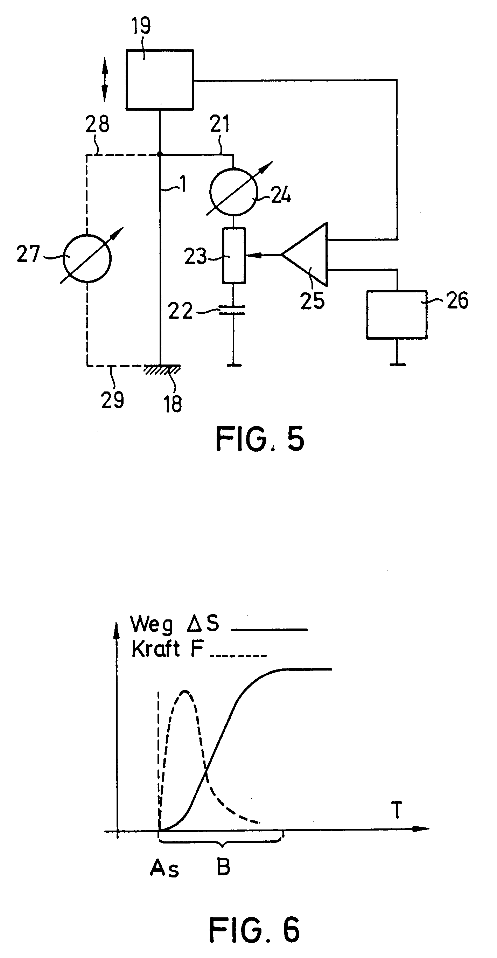

Beim Ausführungsbeispiel nach Figur 5 befindet sich der Drahtabschnitt 1 zwischen dem festen Punkt 18 und einem Kontrollelement 19, dessen Funktion weiter unten genauer beschrieben wird. Der Drahtabschnitt 1 ist in einen Heizstromkreis 21 eingeschaltet, der die Stromquelle 22, den regelbaren Widerstand 23 und das Strommeßgerät 24 umfaßt. Der Drahtabschnitt 1 ist im Bereich seines Befestigungspunktes 18 gleichzeitig geerdet.

Ziel der dargestellten Schaltung ist es, die Temperatur und damit kristallinen Zustand des Drahtabschnittes 1 unabhängig von der Temperaturbeeinflussung durch seine Umgebung konstant zu halten, und zwar auf einem Wert, der innerhalb des Temperaturbereiches liegt, bei dem eine Längenänderung aufgrund seiner gestalterinnernden Eigenschaft stattfindet. Das Kontrollelement 19 hat die Aufgabe, elektrische Signale zu liefern, die von der Länge, der Temperatur oder der Zugkraft des Drahtabschnittes 1 abhängen. Diese Signale werden als Ist-Wert dem vergleichenden Verstärker 25 zugeführt. Außerdem erhält der Verstärker vom Sollwertgeber 26 einen gewünschten Soll-Wert. Mit Hilfe dieser Signale erfolgt eine Steuerung des regelbaren Widerstandes 23 derart, daß die Länge, die Temperatur und die Zugkraft des Drahtabschnittes 1 (bzw. allgemein sein Zustand) unabhängig von dem Temperatureinfluß durch seine Umgebung konstant gehalten werden. Dadurch ergibt sich als Maß für den äußeren Temperatureinfluß der im Heizstromkreis 21 fließende Strom, der mit Hilfe des Strommeßgerätes feststellbar ist.

Eine andere Meßgröße kann die am Drahtabschnitt 1 anliegende Heizspannung sein. Mit 27 ist ein Spannungsmeßgerät bezeichnet, das über die gestrichelt dargestellten Verbindungsleitungen 28 und 29 mit den Enden des Drahtabschnittes 1 verbunden ist.

Das Kontrollelement 19 kann z. B. ein Kraftsensor sein, der der vom Drahtabschnitt 1 ausgeübten Kraft F proportionale Signale liefert. Bei einer bestimmten Temperatur, die einen bestimmten Zustand des Drahtabschnittes 1 entspricht, übt der Drahtabschnitt 1 auf den Kraftsensor 19 eine bestimmte Kraft F aus. Diese Kraft soll konstant gehalten werden. Ändert sich infolge einer Temperaturänderung der Zustand des Drahtabschnittes 1, dann ändert sich auch die Kraft F. Die dem Verstärker 25 zugeführten Signale bewirken dann eine Erhöhung oder Erniedrigung des im Heizstromkreis 21 fließenden Stromes, und zwar derart, daß der Wert der vom Drahtabschnitt ausgeübten Kraft F wieder den ursprünglichen Konstantwert annimmt. Der geänderte Heizstrom oder die geänderte Heizspannung sind dann ein Maß für den auf den Drahtabschnitt wirkenden geänderten Temperatureinfluß. Eine ähnliche Regelung kann auch optisch (z. B. mit Hilfe einer auf eine Längenänderung des Drahtabschnittes 1 reagierende Lichtschranke) oder in besonders vorteilhafter Weise durch Temperaturmessung (z. B. mit Hilfe eines am Drahtabschnitt 1 befestigten Thermofühlers) erzielt werden.

Das Diagramm nach Figur 6 zeigt Eigenschaften des verwendeten gestalterinnernden Werkstoffes. Gegen die Temperatur T (x-Achse) sind die Wegänderung (ausgezogene Linie) und die Kraft F (gestrichelte Linien dargestellt. Der bei der Temperatur Aₛ beginnende Bereich, bei dem der gestalterinnernde Werkstoff aufgrund seiner besonderen Eigenschaft seinen Zustand ändert, ist mit B bezeichnet. Bei vielen Werkstoffen der hier betroffenen Art hat der Temperaturbereich B die Größenordnung von ca. 20 K. Beim Übergang von der tieferen Temperatur zur höheren Temperatur geht die Martensit-Struktur in die Austenit-Struktur über. Zu Beginn dieser kristallinen Umwandlung sind die auftretenden Kräfte am größten. Liegt die Temperatur, auf der der Drahtabschnitt 1 beim Ausführungsbeispiel nach Figur 3 konstant gehalten wird, in diesem Bereich, d. h. Im oberen Bereich der Anstiegsflanke des Verlaufs der Kraft F, dann ergibt sich eine besonders hohe Empfindlichkeit und Meßgenauigkeit.

Der erfindungsgemäße Sensor ist bei allen Meß- und Analysengeräten einsetzbar, bei denen die Meßergebnisse aus Temperaturveränderungen des Sensors gewonnen werden. Der Zustand des Sensorelementes hängt nicht nur - unmittelbar - von der Umgebungstemperatur, sondern auch - mittelbar - von der Dichte, dem Druck, der Wärmeleitung, der Gasart, der Teilchenzahl usw. der das Sensorelement unmittelbar umgebenden Atmosphäre ab. Die genannten physikalischen Eigenschaften sind deshalb mit Hilfe des erfindungsgemäßen Sensors meßbar. Auch von der auf das Sensorelement auftreffenden Strahlung ist seine Temperatur abhängig, so daß der Sensor zur Messung der Leuchtdichte von Lampen und Laserlichtquellen verwendet werden kann. Infolge der Gasartabhängigkeit sind Rückschlüsse auf die Art der den Sensor umgebenden Moleküle oder Atome möglich, so daß der Sensor auch bei Analysengeräten einsetzbar ist.

Bei Memory-Werkstoffen sind der Einweg- und der Zweiwegeffekt bekannt. Werkstoffe mit beiden Eigenschaften können bei Sensoren der vorbeschriebenen Art eingesetzt werden. Mit Gewichten oder Federn belastete Sensorbauteile 1, 9 verhalten sich aufgrund der Belastung ohnehin wie Werkstoffe mit Zweiwegeffekt, auch wenn sie nur Einweg-Memory-Eigenschaften haben.

## Patentansprüche

1. Sensor für Meß- oder Analysengeräte mit einem aus einem gestalterinnernden Werkstoff bestehenden Sensorelement (1, 9), bei welchem die zu messende Größe unmittelbar oder mittelbar Einfluß auf den Zustand des Werkstoffes des Sensorelementes ausübt, dadurch gekennzeichnet, daß der Sensor Mittel zur Heizung, Mittel zur Regelung der Heizleistung und ein Kontrollelement (19) umfaßt, das der Erzeugung von vom Zustand des Sensorelementes abhängigen Signalen dient, und daß das Sensorelement (1, 9) damit derart beheizbar ist, daß seine Betriebstemperatur auf eine Temperatur im Bereich des strukturellen Phasenüberganges seines Werkstoffes einstellbar ist.

2. Sensor nach Anspruch 1, dadurch gekennzeichnet, daß das aus gestalterinnerndem Werkstoff bestehende Sensorelement ein Drahtabschnitt (1) ist, bei dem bei einer Temperaturveränderung eine Längenänderung eintritt.

3. Sensor nach Anspruch 1, dadurch gekennzeichnet, daß ein Sensorelement (9) vorgesehen ist, bei dem bei einer Temperaturveränderung eine Biegung eintritt.

4. Sensor nach einem der vorhergehenden Ansprüche, dadurch gekennzeichnet, daß das Sensorelement (1, 9) Bestandteil eines Stromkreises mit einer Stromquelle (15, 20) ist.

5. Sensor nach einem der Ansprüche 1 bis 4, dadurch gekennzeichnet, daß das Kontrollelement (19) als Thermofühler ausgebildet ist.

6. Sensor nach einem der Ansprüche 1 bis 4, dadurch gekennzeichnet, daß das Kontrollelement (19) als Kraftsensor, Lichtschranke oder dergleichen ausgebildet ist.

7. Sensor nach einem der vorhergehenden Ansprüche, dadurch gekennzeichnet, daß das Sensorelement (1, 9) aus einem gestalterinnernden Werkstoff mit Zweiwegeffekt besteht.

8. Verfahren zum Betrieb eines Sensors nach einem der vorhergehenden Ansprüche, bei dem, der Temperaturwert, auf dem das Sensorelement (1, 9) konstant gehalten wird, im unteren Bereich des Bereiches B liegt, in dem das Sensorelement (1, 9) aufgrund seiner gestalterinnernden Eigenschaft seine Länge oder Form verändert.

9. Verfahren nach Anspruch 8, dadurch gekennzeichnet, daß der Temperaturwert, auf dem das Sensorelement (1, 9) konstant gehalten wird, in einem Bereich liegt, in dem die von der Temperatur abhängige Strukturveränderung des Werkstoffes des Sensorelementes (1, 9) hoch ist.

10. Verfahren nach Anspruch 9, dadurch gekennzeichnet, daß der Temperaturwert, auf dem das Sensorelement (1, 9) konstant gehalten wird, in einem Bereich liegt, in dem die von der Temperatur abhängige Strukturveränderung ihr Maximum hat.

11. Verfahren nach den Ansprüchen 8 bis 10 zum Betrieb eines Sensors, bei dem das Sensorelemente (1, 9) Bestandteil eines Stromkreises mit einer Stromquelle (15, 20) ist und Mittel zur Regelung der Heizleistung vorgesehen sind, dadurch gekennzeichnet, daß die am Sensorelement (1, 9) anliegende Spannung, der durch das Sensorelement (1, 9) fließende Heizstrom oder die Heizleistung gemessen und dieses Meßergebnis zur Bildung eines Meßwertes in Bezug auf die zu messende Größe verwendet wird.

## Claims

1. Sensor for measuring instruments or analyzers, with a sensor element (1, 9) consisting of a shape-remembering material, in which the quantity to be measured has a direct or indirect influence on the state of the material of the sensor element, characterised in that the sensor contains means for heating, means for regulating the heat output and a monitoring element (19) that is used to generate signals dependent upon the state of the sensor element, and that the sensor element (1, 9) can be heated in such a way that its operating temperature can be adjusted within the range of the structural phase transition point of its material.

2. Sensor according to Claim 1, characterised in that, the sensor element consisting of shape-remembering material is a length of wire (1) in which a change of length occurs during a change in temperature.

3. Sensor according to Claim 1, characterised in that, a sensor element (9) is provided in which bending occurs during a change in temperature.

4. Sensor according to one of the preceding claims, characterised in that, the sensor element (1, 9) is a constituent part of an electrical circuit having a current source (15, 20).

5. Sensor according to one of the Claims 1 to 4, characterised in that, the monitoring element (19) is in the form of a temperature sensor.

6. Sensor according to one of the Claims 1 to 4, characterised in that, the monitoring element (19) is in the form of a force sensor, light barrier or such like.

7. Sensor according to one of the preceding claims, characterised in that, the sensor element (1,9) consists of a shape-remembering material with bidirectional effect.

8. Process for operating a sensor according to one of the preceding claims, in which the temperature value at which the sensor element (1, 9) is held constant is situated in the lower part of the range B in which, due to its shape-remembering property, the sensor element (1, 9) changes its length or shape.

9. Sensor according to Claim 8, characterised in that, the temperature value at which the sensor element (1, 9) is held constant is situated in a range in which the temperature-dependent structural change of the material of the sensor element (1, 9) is large.

10. Sensor according to Claim 1, characterised in that, the temperature value at which the sensor element (1, 9) is held constant is situated in a range in which the temperature-dependent structural change has its maximum.

11. Process according to Claims 8 to 10 for operating a sensor, in which the sensor element (1, 9) is a constituent part of an electrical circuit having a current source (15, 20), and means for regulating the heat output are provided, characterised in that, the voltage applied to the sensor element (1, 9), the heating current flowing through the sensor element (1, 9), or the heat output, is measured and this measurement result is used to generate a measured value with respect to the quantity to be measured.

## Revendications

1. Détecteur pour appareils de mesure et d'analyse comprenant un élément détecteur (1, 9) réalisé en matériau à mémoire de forme, dans lequel la grandeur à mesurer exerce directement ou indirectement une influence sur l'état du matériau de l'élément détecteur, caractérisé en ce que le détecteur comprend des moyens pour chauffer, des moyens pour régler la puissance de chauffage et un élément de contrôle (19) qui sert à produire des signaux qui dépendent de l'état de l'élément détecteur, et en ce que l'élément détecteur (1, 9) peut être ainsi chauffé de telle manière que sa température de fonctionnement peut être réglée à une température dans la région de la transition de phase structurelle de son matériau.

2. Détecteur selon la revendication 1, caractérisé en ce que l'élément détecteur réalisé en matériau à mémoire de forme est un tronçon de fil (1) dans lequel se produit une variation de longueur lors d'une variation de température.

3. Détecteur selon la revendication 1, caractérisé en ce qu'il est prévu un élément détecteur (9) dans lequel se produit une flexion lors d'une variation de température.

4. Détecteur selon l'une des revendications précédentes, caractérisé en ce que l'élément détecteur (1, 9) est un composant d'un circuit de courant avec une source de courant (15, 20).

5. Détecteur selon l'une des revendications 1 à 4, caractérisé en ce que l'élément de contrôle (19) est réalisé sous la forme d'un capteur thermique.

6. Détecteur selon l'une des revendications 1 à 4, caractérisé en ce que l'élément de contrôle (19) est réalisé sous la forme d'un capteur d'effort, d'une barrière lumineuse, ou similaire.

7. Détecteur selon l'une des revendications précédentes, caractérisé en ce que l'élément détecteur (1, 9) est réalisé en un matériau à mémoire de forme avec effet bidirectionnel.

8. Procédé de mise en oeuvre d'un détecteur selon l'une des revendications précédentes, dans lequel la valeur de la température constante à laquelle l'élément détecteur (1, 9) est maintenu est située dans la région inférieure de la plage B dans laquelle l'élément détecteur (1, 9) varie de forme ou de longueur en raison de sa propriété à mémoire de forme.

9. Procédé selon la revendication 8, caractérisé en ce que la valeur de la température constante à laquelle l'élément détecteur (1, 9) est maintenu, est située dans une région dans laquelle la variation de structure du matériau de l'élément détecteur (1, 9), en fonction de la température, est élevée.

10. Procédé selon la revendication 9, caractérisé en ce que la valeur de la température constante à laquelle l'élément détecteur (1, 9) est maintenu, est située dans une région dans laquelle la variation de structure fonction de la température présente son maximum.

11. Procédé selon les revendications 8 à 10 pour la mise en oeuvre d'un détecteur dans lequel l'élément détecteur (1, 9) forme partie d'un circuit de courant avec une source de courant (15, 20), et dans lequel sont prévus des moyens pour régler la puissance de chauffage, caractérisé en ce que la tension appliquée à l'élément détecteur (1, 9), le courant de chauffage qui s'écoule à travers l'élément détecteur (1, 9) ou la puissance de chauffage, est mesuré et ce résultat de mesure est utilisé pour former une valeur de mesure en rapport avec la grandeur à mesurer.
